# DEMANDE DE BREVET EUROPEEN

(11) **EP 3 130 477 A1**
(43) Date de publication de la demande: **15.02.2017**
(21) Numéro de dépôt: 16182318.2
(22) Date de dépôt: 02.08.2016
(51) Int. Cl.: B60B 3/04, B23K 9/23, B23K 33/00

(54) **PROCÉDÉ DE SOUDAGE D'UNE PIÈCE EN ACIER SUR UNE PIÈCE EN ALUMINIUM, PAR DÉPÔT DE BAIN DE SOUDURE DANS DES TROUS TRAVERSANTS**

(30) Priorité: 14.08.2015 FR 1557747
(71) Demandeur: Peugeot Citroën Automobiles SA, 78140 Vélizy-Villacoublay (FR); Magnetto Wheels France, 02700 Tergnier (FR)
(72) Inventeur: PALPACUER, ERIC, 75013 PARIS (FR); FEINER, DAVID, 95120 ERMONT (FR); LENOIR, ROMARIC, 78560 LE PORT MARLY (FR)

(57) **Abrégé**

Un procédé est destiné à souder une première pièce (P1), en acier et comprenant un bord périphérique (BP), sur une partie (PS) d'une seconde pièce (P2) en aluminium. Ce procédé comprend une première étape où l'on positionne horizontalement une portion (PP) de cette partie (PS), puis on place une partie, contenant un trou traversant (TT) et appartenant au bord périphérique (BP), au-dessus de cette portion (PP), et une seconde étape où l'on fait tomber dans ce trou traversant (TT) des gouttes d'un bain de soudure (BS), à base d'aluminium et défini avec une torche (TS) à transfert de métal froid, afin de le remplir de ce bain de soudure (BS), puis on laisse ce dernier (BS) se solidifier, puis on réitère les première et seconde étapes avec une autre portion (PP) et une autre partie du bord périphérique (BP) contenant un autre trou traversant (TT).

## Description

L'invention concerne les procédés de soudage de pièces en acier sur des pièces en aluminium.

Dans certains domaines, comme par exemple celui des véhicules, éventuellement automobiles, la réalisation de certains objets (ou dispositifs) comprend une étape de soudage d'une pièce en acier sur une pièce en aluminium. C'est par exemple le cas des roues dites hybrides dans lesquelles l'une des pièces est un voile en acier destiné à être solidarisé à un moyeu d'un essieu du véhicule, et l'autre pièce est une jante en aluminium.

Pour réaliser ce soudage, on peut, par exemple et comme décrit dans le document brevet FR 2994668, plaquer la face externe du bord périphérique de la pièce en acier contre une partie de la pièce en aluminium, puis générer sur cette dernière, contre la face d'extrémité de ce bord périphérique, un bain de soudure à base d'aluminium avec une torche à transfert de métal froid (ou CMT (« Cold Métal Transfer »)), puis laisser ce bain de soudure se solidifier.

L'arc à l'extrémité de la torche induit une grande chaleur qui engendre simultanément une fusion locale de la partie en aluminium et une fusion locale du bord périphérique en acier. Hélas, cette dernière fusion locale empêche la réalisation d'un bon brasage avec le bain de soudure, et donc nuit à la qualité de la liaison acier/aluminium, ce qui peut entraîner une mise au rebut des deux pièces en raison d'une incapacité à supporter certains efforts prévus. En outre, la liaison entre la brasure finale et la pièce en acier se fait seulement sur la face d'extrémité du bord périphérique de cette dernière, ce qui est très réduit et donc ne permet pas d'offrir une tenue mécanique suffisante.

Pour améliorer la situation, il a été proposé, notamment dans le document brevet EP 0944483, d'utiliser un bord périphérique de la pièce en acier dont la face d'extrémité fait un angle obtus (strictement supérieur aux 90° habituels) avec sa face externe qui est plaquée contre la pièce en aluminium. Le bain de soudure est donc déposé dans une zone concave délimitée par la face d'extrémité inclinée et la pièce en aluminium. Le volume de la zone concave de réception du bain de soudure étant assez réduit, cette variante de réalisation n'apporte pas une entière satisfaction, et notamment ne permet toujours pas de supporter certains efforts prévus.

L'invention a donc notamment pour but d'améliorer la situation.

Elle propose notamment à cet effet un procédé, destiné à souder une première pièce, en acier et comprenant un bord périphérique, sur une partie d'une seconde pièce en aluminium, et comprenant :
- une première étape dans laquelle on positionne dans un plan sensiblement horizontal une portion de la partie de la seconde pièce, puis on place une partie, contenant au moins un trou traversant et appartenant au bord périphérique non oxydé, au-dessus de et contre cette portion, et
- une seconde étape dans laquelle on fait tomber d'une hauteur choisie dans ce trou traversant des gouttes d'un bain de soudure, à base d'aluminium et défini avec une torche à transfert de métal froid, jusqu'à ce que ce trou traversant soit rempli sensiblement intégralement de ce bain de soudure, puis on laisse ce dernier se solidifier, puis on réitère les première et seconde étapes avec une autre portion de la partie de la seconde pièce et une autre partie du bord périphérique contenant au moins un autre trou traversant.

Grâce aux trous traversants délimités par une surface notablement plus importante que celle de la face d'extrémité du bord périphérique, la surface de contact locale entre ce bord périphérique et la soudure finale est notablement plus importante que dans une roue hybride de l'art antérieur, et donc la tenue mécanique de la liaison est notablement améliorée.

Par exemple, la hauteur choisie peut être comprise entre environ 1 mm et environ 10 mm.

L'invention propose également une roue hybride destinée à équiper un véhicule et comprenant une première pièce en acier solidarisée à une seconde pièce en aluminium par la mise en oeuvre d'un procédé de soudage du type de celui présenté ci-avant.

La roue hybride selon l'invention peut comporter d'autres caractéristiques qui peuvent être prises séparément ou en combinaison, et notamment :
- sa première pièce peut comprendre un bord périphérique soit pourvu d'un revêtement en zinc, soit ayant été préalablement décapé avec un désoxydant, avant soudage ;
- sa première pièce peut comprendre un bord périphérique comprenant au moins un trou traversant présentant, dans un plan parallèle à une face interne qu'il comprend, une forme choisie parmi (au moins) une ellipse, un ovale, un rond, un carré, un rectangle, un triangle, un trapèze, une croix et une étoile à au moins trois branches ;
- sa première pièce peut comprendre un bord périphérique comportant au moins un trou traversant présentant une section transverse de forme rectangulaire ;
- en variante, sa première pièce peut comprendre un bord périphérique comportant au moins un trou traversant comprenant des première et seconde sous-parties se prolongeant mutuellement, présentant respectivement des première et seconde formes différentes, et débouchant respectivement sur des faces interne et externe du bord périphérique, orientées respectivement à l'opposé de et vers la portion de la partie de la seconde pièce ;
   ➢ les première et seconde sous-parties de chaque trou traversant peuvent présenter des sections transverses de formes rectangulaires différentes ;
   ➢ en variante, chacune des première et seconde sous-parties de chaque trou traversant peut présenter une section transverse de forme choisie parmi (au moins) un carré, un rectangle et un trapèze ;
- sa première pièce peut être un voile destiné à être solidarisé à un moyeu d'un essieu du véhicule, et la seconde pièce peut être une jante.

D'autres caractéristiques et avantages de l'invention apparaîtront à l'examen de la description détaillée ci-après, et des dessins annexés, sur lesquels :
- les figures 1A à 1C illustrent schématiquement et respectivement, dans des vues en perspective, un premier exemple de voile de roue hybride avant soudage, un exemple de jante de roue hybride avant soudage, et une roue hybride constituée des voile et jante des figures 1A et 1B juste avant le soudage,
- la figure 2 illustre schématiquement, dans une vue en coupe dans un plan ZY, la roue hybride de la figure 1C,
- la figure 3 illustre schématiquement, dans une vue en perspective, une variante de réalisation du voile de roue hybride de la figure 1A,
- les figures 4A et 4B illustrent schématiquement et respectivement, dans des vues en coupe dans le plan ZY, une partie de la roue hybride des figures 1C et 2 à un stade intermédiaire et à la fin de la mise en oeuvre du procédé de soudage selon l'invention,
- les figures 5 à 8 illustrent schématiquement et respectivement, dans des vues en coupe dans le plan ZY, des petites parties de quatre roues hybrides constituées chacune de la jante de la figure 1B et d'une variante du voile de la figure 1A à la fin de la mise en oeuvre du procédé de soudage selon l'invention.

L'invention a notamment pour but de proposer un procédé destiné à permettre le soudage d'une première pièce P1 en acier sur une partie PS d'une seconde pièce P2 en aluminium.

Dans ce qui suit on considère, à titre d'exemple non limitatif, que les première P1 et seconde P2 pièces sont respectivement un voile en acier et une jante en aluminium destinés à constituer une roue hybride RH d'un véhicule, éventuellement de type automobile. Mais l'invention n'est pas limitée à ce type d'application. Elle concerne en effet tout type de dispositif ou système ou installation comprenant une première pièce en acier soudée sur une seconde pièce en aluminium.

Sur les figures, la direction X est une première direction horizontale, la direction Y est une seconde direction horizontale, perpendiculaire à la première direction horizontale X, et la direction Z est une direction dite verticale, perpendiculaire aux première X et seconde Y directions horizontales.

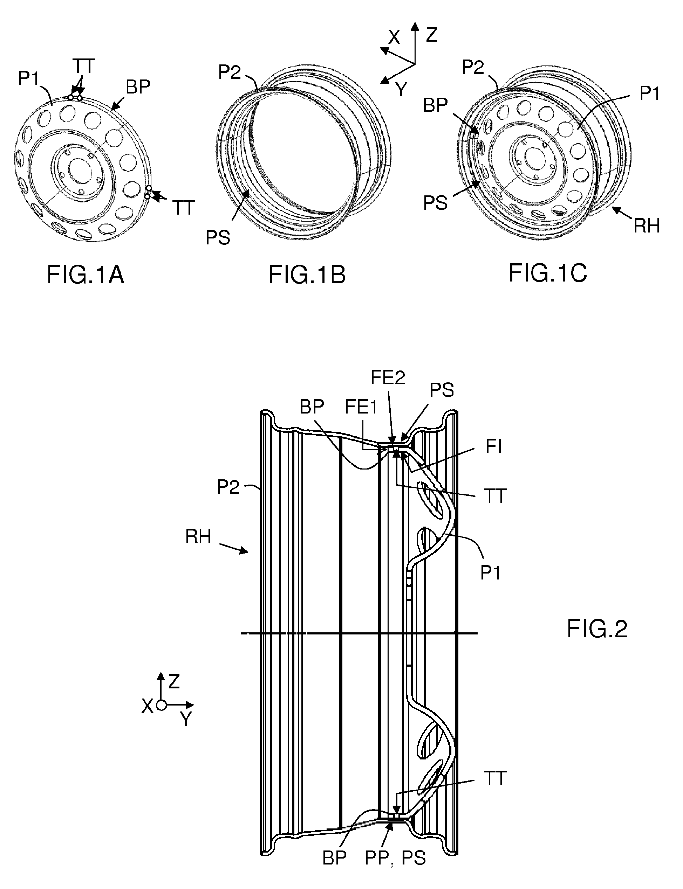

On a schématiquement représenté sur les figures 1A et 1B respectivement un premier exemple de première pièce P1 en acier (ici constituant un voile de roue hybride RH) avant soudage, et un exemple de seconde pièce P2 en aluminium (ici constituant une jante de roue hybride RH) avant soudage. Par ailleurs, on a schématiquement représenté sur les figures 1C et 2 un exemple de roue hybride RH constituée des voile P1 et jante P2 des figures 1A et 1B, juste avant la mise en oeuvre d'un procédé de soudage selon l'invention.

Comme illustré, la première pièce P1 en acier comprend un bord périphérique BP (ici annulaire) muni d'une face d'extrémité FE1, d'une face interne FI et d'une face externe FE2 (opposée à sa face interne FI et destinée à être orientée vers la seconde pièce P2). Ce bord périphérique BP comprend au moins deux trous traversants TT destinés à permettre sa solidarisation à au moins deux portions PP d'une partie choisie PS de la seconde pièce P2 en aluminium. La solidarisation se faisant via des trous traversants TT, elle est donc discontinue, et non pas continue sur la totalité du bord périphérique BP du voile P1.

Dans le premier exemple illustré non limitativement sur la figure 1A, le bord périphérique BP comprend quatre parties séparées deux à deux d'un secteur angulaire de 90°, et comprenant chacune une paire de trous traversants TT de forme sensiblement circulaire.

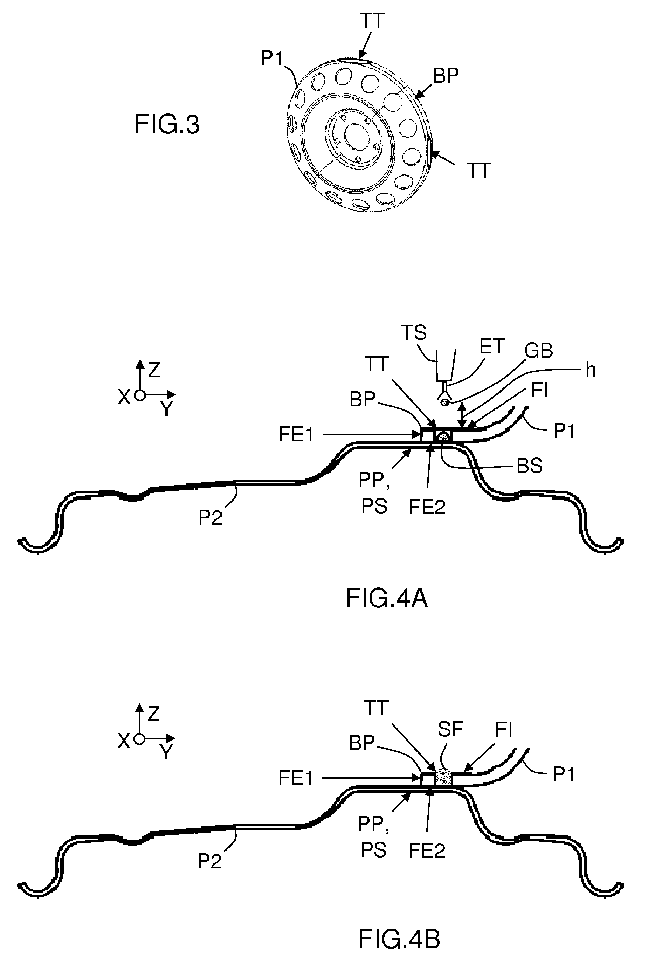

Dans le second exemple illustré non limitativement sur la figure 3, le bord périphérique BP comprend quatre parties séparées deux à deux d'un secteur angulaire de 90°, et comprenant chacune un trou traversant TT de forme sensiblement elliptique.

On notera que chaque trou traversant TT du bord périphérique BP peut présenter quasiment n'importe quelle forme géométrique dans un plan parallèle à la face interne FI. Par exemple, cette forme peut être une ellipse (figure 3), un ovale, un rond (figure 1 A), un carré, un rectangle, un triangle, un trapèze, une croix ou une étoile à au moins trois branches.

Le procédé de soudage, selon l'invention, comprend des première et seconde étapes.

Comme illustré sur la figure 4A, dans la première étape on positionne dans un plan sensiblement horizontal (XY) une portion PP de la partie PS de la seconde pièce P2, puis on place une partie, contenant au moins un trou traversant TT et appartenant au bord périphérique BP non oxydé, au-dessus de et contre la face interne de cette portion PP.

On entend ici par « non oxydé » le fait d'être apte au brasage. Cette aptitude peut résulter du fait que le bord périphérique BP de la première pièce P1 a été préalablement pourvu d'un revêtement en zinc, électrolytique ou galvanisé (avant son plaquage), ou bien décapé avec un désoxydant. Il est rappelé que la température très élevée qui est induite par un arc de torche lors d'un soudage provoque une pulvérisation de la couche de zinc protectrice qui garantit que le bord périphérique BP n'est pas oxydé au moment où il va être effectivement soudé (ou brasé) à la partie PS de la seconde pièce P2.

Dans la seconde étape, du procédé selon l'invention, on commence, comme illustré sur la figure 4A, par faire tomber d'une hauteur h choisie (par rapport à la seconde pièce P2) dans le (chaque) trou traversant TT de la partie du bord périphérique BP considérée des gouttes GB d'un bain de soudure BS à base d'aluminium, jusqu'à ce que ce (chaque) trou traversant TT soit rempli sensiblement intégralement de ce bain de soudure BS. Les gouttes GB de bain de soudure BS sont définies avec une torche TS à transfert de métal froid (ou CMT).

On notera que l'on entend ici par « bain de soudure » une petite quantité de métal de soudure fondu, en fusion, qui a été générée par l'extrémité (ou fil) ET de la torche CMT TS. Il est rappelé que la technique CMT est une technique de soudage à l'arc électrique dans laquelle le fil ET subit des mouvements de va-et-vient qui permettent un transfert de matière à courant réduit (presque nul), et donc un dépôt de matière plus « froide » qu'avec une technique de soudage classique.

A titre d'exemple non limitatif, le bain de soudure BS peut être à base d'aluminium, de silicium et de manganèse. Par exemple, il peut comprendre 3% de silicium et 1 % de manganèse.

Comme illustré sur la figure 4B, la suite de la seconde étape consiste à laisser le bain de soudure BS se solidifier dans le (chaque) trou traversant TT pour constituer une soudure ou un brasage final(e) SF. Ensuite, on réitère les première et seconde étapes avec une autre portion PP de la partie PS et une autre partie du bord périphérique BP contenant au moins un autre trou traversant TT, jusqu'à ce que tous les trous traversants TT du bord périphérique BP comprennent une soudure ou un brasage final(e) SF.

La génération des gouttes GB de métal fondu (ou bain de soudure BS) à une hauteur choisie h de la seconde pièce P2 est destinée à permettre un brasage de l'acier du bord périphérique BP et une fusion de l'aluminium. Cela permet une liaison finale de qualité.

On notera que la hauteur choisie h peut, par exemple, être comprise entre environ 1 mm et environ 10 mm. Par exemple, cette hauteur choisie h peut être sensiblement égale à 2 mm par rapport à la seconde pièce P2.

Chaque trou traversant TT étant délimité par une surface qui est notablement plus importante que celle de la face d'extrémité FE1, la surface de contact locale entre le bord périphérique BP et la soudure finale SF est donc notablement plus importante que dans une roue hybride de l'art antérieur, ce qui permet d'augmenter notablement la tenue mécanique de la liaison SF/P1. Par ailleurs, cela permet d'obtenir un arrêt positif (par encastrement) suivant les deux sens de la seconde direction horizontale Y. En outre, chaque trou traversant TT peut avantageusement maintenir l'intégralité du bain de soudure BS pendant toute sa phase de solidification, ce qui évite les pertes de bain de soudure.

Comme illustré sur les figures 4 à 8, la mise en oeuvre de l'invention peut se faire en utilisant des premières pièces P1 dont les bords périphériques BP respectifs comprennent des trous traversants TT ayant des sections transverses (dans le plan ZY) de différentes formes.

Dans le premier exemple illustré non limitativement sur les figures 4A et 4B, la première pièce P1 comprend un bord périphérique BP comportant au moins un trou traversant TT présentant une section transverse (dans le plan ZY) de forme rectangulaire. On notera que dans une variante de réalisation non illustrée, cette section transverse pourrait être en forme de trapèze (le plus grand des deux côtés parallèles étant situé soit du côté de la face externe FE2, soit du côté de la face interne FI).

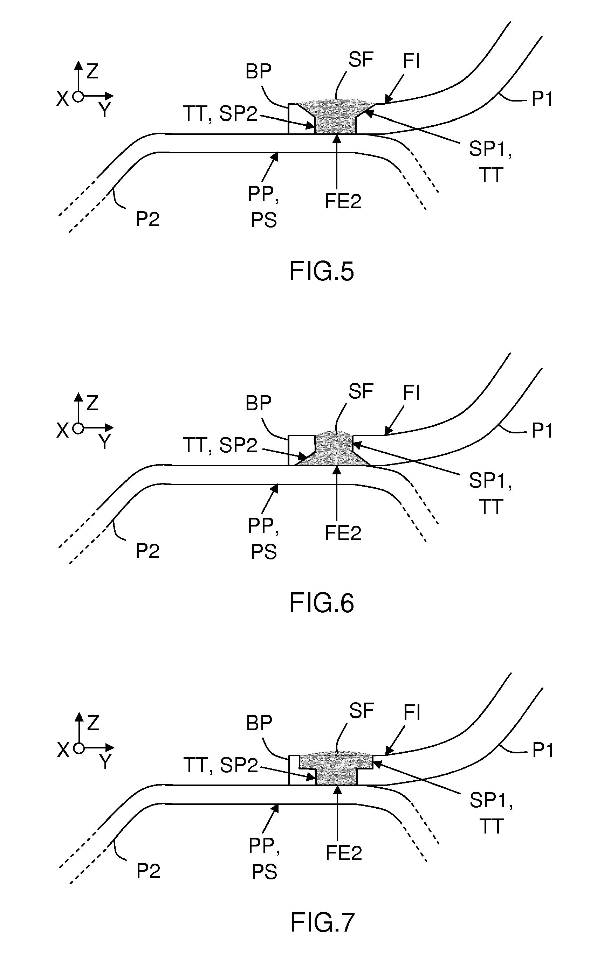

Dans les deuxième à cinquième exemples illustrés non limitativement et respectivement sur les figures 5 à 8, la première pièce P1 comprend un bord périphérique BP comportant au moins un trou traversant TT comprenant des première SP1 et seconde SP2 sous-parties se prolongeant mutuellement. Ces dernières (SP1 et SP2) présentent respectivement des première et seconde formes différentes, et débouchent respectivement sur les faces interne FI et externe FE2 du bord périphérique BP (lesquelles sont orientées respectivement à l'opposé de et vers la portion PP de la partie PS).

Par exemple, et comme illustré non limitativement dans les deuxième et troisième exemples des figures 5 et 6, chacune des première SP1 et seconde SP2 sous-parties de chaque trou traversant TT peut présenter une section transverse dont la forme est choisie parmi au moins un carré, un rectangle et un trapèze.

Dans le deuxième exemple illustré non limitativement sur la figure 5, la première sous-partie SP1 présente une section transverse en forme de trapèze dont le plus grand des deux côtés parallèles est situé du côté de la face interne FI, et la seconde sous-partie SP2 présente une section transverse en forme de rectangle. Ici, on a donc un double chanfrein (faces inclinées) du côté de la face interne FI. Ce mode de réalisation permet non seulement d'augmenter la surface de contact entre la première pièce P1 et la soudure finale SF, mais également d'assurer un plaquage de la première pièce P1 contre la seconde pièce P2 lors du retrait thermique (par refroidissement) du bain de soudure BS, ce qui garantit un arrêt positif suivant la direction verticale Z. Par ailleurs, le raccordement entre la partie interne de la soudure finale SF et le trou traversant TT est progressif, ce qui permet d'éviter une concentration de contrainte et donc permet de mieux supporter la fatigue.

Dans le troisième exemple illustré non limitativement sur la figure 6, la première sous-partie SP1 présente une section transverse en forme de rectangle, et la seconde sous-partie SP2 présente une section transverse en forme de trapèze dont le plus grand des deux côtés parallèles est situé du côté de la face externe FE2. Ici, on a donc un double chanfrein (faces inclinées) du côté de la face externe FE2. Ce mode de réalisation permet d'augmenter non seulement la surface de contact entre la première pièce P1 et la soudure finale SF, mais également la surface de contact entre la seconde pièce P2 et la soudure finale SF dans le plan de cisaillement XY. Par ailleurs, le raccordement entre la base de la soudure finale SF (côté FE2) et le trou traversant TT est progressif, ce qui permet d'éviter une concentration de contrainte et donc permet de mieux supporter la fatigue.

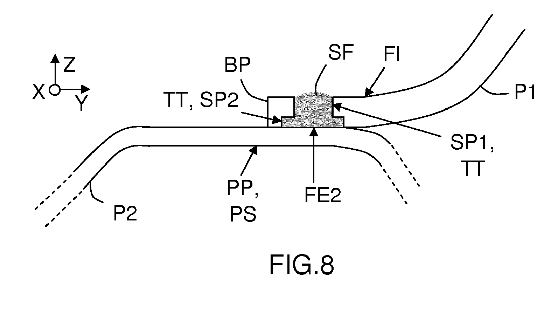

Egalement par exemple, et comme illustré non limitativement sur les figures 7 et 8, les première SP1 et seconde SP2 sous-parties de chaque trou traversant TT peuvent présenter des sections transverses de formes rectangulaires différentes.

Dans le quatrième exemple illustré non limitativement sur la figure 7, la première sous-partie SP1 présente une section transverse en forme de premier rectangle, et la seconde sous-partie SP2 présente une section transverse en forme de second rectangle ayant un grand côté suivant la seconde direction horizontale Y qui est plus petit que le grand côté du premier rectangle. Ici, on a donc une espèce de « lamage » (SP1) du côté de la face interne FI. Ce mode de réalisation permet non seulement d'augmenter la surface de contact entre la première pièce P1 et la soudure finale SF, mais également d'assurer un plaquage de la première pièce P1 contre la seconde pièce P2 lors du retrait thermique (par refroidissement) du bain de soudure BS, ce qui garantit un arrêt positif suivant la direction verticale Z. Par ailleurs, ce lamage (SP1) côté interne permet d'éviter un débordement de la soudure finale SF hors de son trou traversant TT, et donc de garantir un jeu minimum avec le volume des freins (lorsque la seconde pièce P2 est une jante).

Dans le cinquième exemple illustré non limitativement sur la figure 8, la première sous-partie SP1 présente une section transverse en forme de premier rectangle, et la seconde sous-partie SP2 présente une section transverse en forme de second rectangle ayant un grand côté suivant la seconde direction horizontale Y qui est plus grand que le grand côté du premier rectangle. Ici, on a donc une espèce de « lamage » (SP2) du côté de la face externe FE2. Ce mode de réalisation permet d'augmenter non seulement la surface de contact entre la première pièce P1 et la soudure finale SF, mais également la surface de contact entre la seconde pièce P2 et la soudure finale SF dans le plan de cisaillement XY. Par ailleurs, le raccordement entre la base de la soudure finale SF (côté FE2) et le trou traversant TT permet de mieux supporter la fatigue.

## Revendications

1. Procédé de soudage d'une première pièce (P1), en acier et comprenant un bord périphérique (BP), sur une partie (PS) d'une seconde pièce (P2) en aluminium, **caractérisé en ce qu'**il comprend une première étape dans laquelle on positionne dans un plan sensiblement horizontal une portion (PP) de ladite partie (PS), puis on place une partie, contenant au moins un trou traversant (TT) et appartenant audit bord périphérique (BP) non oxydé, au-dessus de et contre ladite portion (PP), et une seconde étape dans laquelle on fait tomber d'une hauteur choisie dans ledit trou traversant (TT) des gouttes (GB) d'un bain de soudure (BS), à base d'aluminium et défini avec une torche (TS) à transfert de métal froid, jusqu'à ce que ledit trou traversant (TT) soit rempli sensiblement intégralement dudit bain de soudure (BS), puis on laisse ce dernier (BS) se solidifier, puis on réitère lesdites première et seconde étapes avec une autre portion (PP) de ladite partie (PS) et une autre partie dudit bord périphérique (BP) contenant au moins un autre trou traversant (TT).

2. Procédé selon la revendication 1, **caractérisé en ce que** ladite hauteur choisie est comprise entre environ 1 mm et environ 10 mm.

3. Roue hybride (RH) pour un véhicule, **caractérisée en ce qu'**elle comprend une première pièce (P1) en acier solidarisée à une seconde pièce (P2) en aluminium par la mise en oeuvre d'un procédé de soudage selon l'une des revendications précédentes.

4. Roue hybride selon la revendication 3, **caractérisée en ce que** ladite première pièce (P1) comprend un bord périphérique (BP) soit pourvu d'un revêtement en zinc, soit ayant été préalablement décapé avec un désoxydant, avant soudage.

5. Roue hybride selon l'une des revendications 3 et 4, **caractérisée en ce que** ladite première pièce (P1) comprend un bord périphérique (BP) comprenant au moins un trou traversant (TT) présentant, dans un plan parallèle à une face interne (FI) qu'il (BP) comprend, une forme choisie dans un groupe comprenant une ellipse, un ovale, un rond, un carré, un rectangle, un triangle, un trapèze, une croix et une étoile à au moins trois branches.

6. Roue hybride selon l'une des revendications 3 à 5, **caractérisée en ce que** ladite première pièce (P1) comprend un bord périphérique (BP) comportant au moins un trou traversant (TT) présentant une section transverse de forme rectangulaire.

7. Roue hybride selon l'une des revendications 3 à 5, **caractérisée en ce que** ladite première pièce (P1) comprend un bord périphérique (BP) comportant au moins un trou traversant (TT) comprenant des première (SP1) et seconde (SP2) sous-parties se prolongeant mutuellement, présentant respectivement des première et seconde formes différentes, et débouchant respectivement sur des faces interne (FI) et externe (FE2) dudit bord périphérique (BP), orientées respectivement à l'opposé de et vers ladite portion (PP) de la partie (PS).

8. Roue hybride selon la revendication 7, **caractérisée en ce que** lesdites première (SP1) et seconde (SP2) sous-parties de chaque trou traversant (TT) présentent des sections transverses de formes rectangulaires différentes.

9. Roue hybride selon la revendication 7, **caractérisée en ce que** chacune desdites première (SP1) et seconde (SP2) sous-parties de chaque trou traversant (TT) présente une section transverse de forme choisie dans un groupe comprenant un carré, un rectangle et un trapèze.

10. Roue hybride selon l'une des revendications 3 à 9, **caractérisée en ce que** ladite première pièce (P1) est un voile destiné à être solidarisé à un moyeu d'un essieu dudit véhicule, et ladite seconde pièce (P2) est une jante.
